# EUROPEAN PATENT APPLICATION

(11) **EP 4 730 539 A1**
(43) Date of publication of application: **22.04.2026**
(21) Application number: 24826255.2
(22) Date of filing: 19.06.2024
(51) Int. Cl.: H01M 50/414, H01M 50/42, H01M 50/426, H01M 50/446, H01M 50/489, H01M 50/46, H01M 50/449, H01M 10/052

(54) **BINDER COMPOSITION FOR SEPARATOR OF ELECTROCHEMICAL DEVICE, AND SEPARATOR OF ELECTROCHEMICAL DEVICE, COMPRISING SAME**

(30) Priority: 19.06.2023 KR 20230078235
(71) Applicant: LG Chem, Ltd., Seoul 07336 (KR)
(72) Inventor: KIM, Kee-Yong, Daejeon 34122 (KR); AHN, Yong-Keon, Daejeon 34122 (KR); LEE, Ki-Woong, Daejeon 34122 (KR); AHN, Jin-Hyeok, Daejeon 34122 (KR); LIM, Mun-Hyuk, Daejeon 34122 (KR)
(74) Representative: Hoffmann Eitle
(86) International application number: PCT/KR2024/008489
(87) International publication number: WO 2024/262940

(57) **Abstract**

The present disclosure provides a composition for a separator of an electrochemical device, a separator including the same, and an electrochemical device including the same, the composition capable of improving electrode adhesion and close adhesion to an olefin polymer porous support while minimizing a binder polymer content, and simultaneously exhibiting low resistance and excellent electrolyte liquid impregnation.

The binder composition for a separator of an electrochemical device according to one embodiment of the present disclosure includes a polyvinyl alcohol-based compound, a binder resin and an aqueous dispersant, wherein the polyvinyl alcohol-based compound is included in an amount of 0.01 wt% to 1.5 wt% based on 100 wt% of the total solid content in the binder composition, and the binder resin includes at least one particle-type acrylic polymer resin.

## Description

### Technical Field

This application claims priority based on Korean Patent Application No. 10-2023-0078235 filed on June 19, 2023. The present disclosure relates to a binder composition for a separator of an electrochemical device, and a separator for an electrochemical device including the same.

### Background Art

Interest in energy storage technology is increasingly growing recently. As the field of application expands to energy of mobile phones, camcorders, notebook PCs and even electric vehicles, efforts on research and development for electrochemical devices are increasingly concretized. Among these, development of secondary batteries, which are rechargeable energy storage devices based on an electrochemical principle, is a focus of attention. Among these, demand for lithium secondary batteries as an energy source is rapidly increasing as technological development and demand for mobile devices increase. Recently, the use of lithium secondary batteries as power sources for electric vehicles (EV) and hybrid electric vehicles (HEV) is realized, making them a key growth driver for the secondary battery market.

Such a secondary battery has a structure in which a rechargeable electrode assembly with a structure of positive electrode/separator/negative electrode is mounted in a battery case, and the separator prevents a short circuit between the positive electrode and the negative electrode, while simultaneously providing a migration path for lithium ions. Accordingly, the separator is a critical factor affecting safety and output properties of a battery.

As such a separator, a polyolefin-based olefin polymer porous support is typically used, and in order to prevent thermal shrinkage of the porous support and to increase adhesion to an electrode, a separator provided with an inorganic hybrid porous layer including an inorganic filler and a binder polymer on at least one surface of the porous support is used.

However, in order to ensure a desired level of electrode adhesion, a large amount of the binder polymer needs to be included in the inorganic hybrid porous layer, which leads to an increase in resistance, and therefore, there is still a problem of cell performance degradation.

In addition, development of a separator in which a mixture of a binder polymer is coated on at least one surface of the separator provided with the inorganic hybrid porous layer to form an adhesive layer is also underway, however, even in this case, peel strength between the olefin polymer porous support and the inorganic hybrid porous layer is not sufficient, or additional formation of the adhesive layer makes it difficult for an electrolyte liquid to pass through, and there is a problem of deteriorating battery output and cycle properties since the adhesive layer itself acts as resistance.

Meanwhile, the inorganic hybrid porous layer may be largely divided into an aqueous coating separator using an aqueous solvent and an oil-based coating separator using an organic solvent. Among these, the aqueous coating separator has advantages in that uniform thin film coating is possible and heat resistance is excellent. However, the aqueous coating separator has problems in that foam is generated during a coating process due to the use of a wetting agent, causing tank overflow, and bubbles are generated on the surface of the separator, causing poor appearance of the separator.

### DISCLOSURE

### Technical Problem

Accordingly, the present disclosure aims to resolve the problems described above, and is directed to providing a binder composition for a separator having excellent electrode adhesion and close adhesion to an olefin polymer porous support while minimizing a binder content, and a separator for an electrochemical device including the same.

In addition, the present disclosure is directed to providing a binder composition for a separator capable of providing sufficient electrolyte liquid impregnation on one surface of a separator while securing separator coatability without using a wetting agent, and a separator for an electrochemical device including the same.

In addition, the present disclosure is directed to providing an electrochemical device including the separator for an electrochemical device.

Other objects and advantages of the present disclosure will be understood from the following description. In addition, it will be readily seen that objects and advantages of the present disclosure will be achieved by means or methods described in the claims, and combinations thereof.

### Technical Solution

The inventors of the present disclosure have found that the above-described problems can be resolved through the following binder composition for a separator of an electrochemical device, separator for an electrochemical device including the same, and electrochemical device including the same.

According to a first embodiment,
there is provided a binder composition for a separator of an electrochemical device,
the binder composition including: a polyvinyl alcohol-based compound; a binder resin; and an aqueous dispersant,
wherein the polyvinyl alcohol-based compound is included in an amount ranging from 0.01 wt% to 1.5 wt% based on 100 wt% of a total solid content in the binder composition, and
the binder resin includes at least one particle-type acrylic polymer resin.

According to a second embodiment, in the first embodiment,
the particle-type acrylic polymer resin has an average particle diameter of 100 nm to 1,500 nm.

According to a third embodiment, in the first or second embodiment,
the polyvinyl alcohol-based compound includes polyvinyl alcohol, modified polyvinyl alcohol or a combination thereof.

According to a fourth embodiment, in any one of the first to third embodiments,
the polyvinyl alcohol-based compound exhibits viscosity of 100 cps to 5,000 cps in a 4% aqueous solution at 25°C.

According to a fifth embodiment, in any one of the first to fourth embodiments,
the binder resin further includes a polyvinylidene fluoride-based polymer resin.

According to a sixth embodiment, in any one of the first to fifth embodiments,
the aqueous dispersant is an acrylic copolymerized polymer.

According to a seventh embodiment, in any one of the first to sixth embodiments,
the acrylic copolymerized polymer is a random copolymer.

According to an eighth embodiment, in any one of the first to seventh embodiments,
the aqueous dispersant is included in an amount ranging from 0.5 wt% to 5.0 wt% based on 100 wt% of a total solid content in the binder composition.

According to a ninth embodiment,
there is provided a separator for an electrochemical device,
the separator including: an olefin polymer porous support; and an inorganic hybrid porous layer formed on at least one side surface of the olefin polymer porous support,
wherein the inorganic hybrid porous layer includes an inorganic filler and the binder composition according to any one of the first to eighth embodiments.

According to a tenth embodiment, in the ninth embodiment,
a content of the inorganic filler is 80 wt% to 99 wt% based on 100 wt% of a total sum of solid content of the inorganic filler and the binder composition.

According to an eleventh embodiment,
there is provided a separator for an electrochemical device,
the separator including: an olefin polymer porous support; an inorganic hybrid porous layer formed on at least one side surface of the olefin polymer porous support; and an adhesive layer formed on a surface of the inorganic hybrid porous layer,
wherein the adhesive layer includes the binder composition according to any one of the first to eighth embodiments.

According to a twelfth embodiment, in the eleventh embodiment,
wherein the inorganic hybrid porous layer includes an inorganic filler and a binder resin for an inorganic hybrid porous layer.

According to a thirteenth embodiment, in the eleventh or twelfth embodiment,
the binder resin for an inorganic hybrid porous layer includes at least one selected from among a particle-type acrylic polymer resin and a polyvinylidene fluoride-based polymer resin.

According to a fourteenth embodiment, in any one of the ninth to thirteenth embodiment,
the separator for an electrochemical device exhibits electrode adhesion of 5 gf/25 mm or greater.

According to a fifteenth embodiment,
there is provided an electrochemical device including: a positive electrode; a negative electrode; and a separator interposed between the positive electrode and the negative electrode,
wherein the separator is the separator of any one of the ninth to fourteenth embodiments.

According to a sixteenth embodiment, in the fifteenth embodiment,
the electrochemical device is a lithium secondary battery.

### Advantageous Effects

A binder composition for a separator according to the present disclosure includes a polyvinyl alcohol-based compound. Introducing a proper amount of the polyvinyl alcohol-based compound to the binder composition of a separator has an effect of improving electrode adhesion and close adhesion to an olefin polymer porous support while minimizing a binder polymer content. A separator to which the binder resin composition is introduced has excellent appearance properties since there is no partial lifting or wrinkling at an interface between the separator and an electrode, and has improved resistance properties and output properties.

### Brief Description of Drawings

Drawings accompanying the present specification illustrate preferred examples of the present disclosure, and serve to aid in further understanding of technical ideas of the present disclosure together with the description of the invention provided above, and therefore, the present disclosure should not be construed as being limited to matters described in these drawings.
FIG. 1a is a diagram schematically illustrating a separator according to Example 4.
FIG. 1b is an SEM image showing a cross-section of the separator according to Example 4.
FIG. 1c is an SEM image showing a surface of the separator according to Example 4.
FIG. 2a is a diagram schematically illustrating a separator according to Example 7.
FIG. 2b is an SEM image showing a cross-section of an inorganic hybrid porous layer of the separator according to Example 7.
FIG. 2c is an SEM image showing a surface of the separator according to Example 7.
FIGS. 3a and 3b show results of evaluating properties of electrolyte liquid impregnation for separators according to Example 4 and Comparative Example 4, respectively.

### Mode for Invention

Hereinafter, the present disclosure will be described in detail. Prior to this, terms or words used in the present specification and the claims should not be interpreted limitedly to common or dictionary meanings, and need to be interpreted as meanings and concepts corresponding to technical ideas of the present disclosure based on a principle in which the inventors may suitably define the concept of terms in order to describe their own invention in the best possible way. Accordingly, constitutions described in the embodiments described in the present specification are just most preferred one embodiment of the present disclosure and do not entirely represent technical ideas of the present disclosure, and therefore, it needs to be understood that there may be various equivalents and modified examples that may replace these at the time of filing.

Throughout the present specification, a description of a certain part "including" or "being provide with" a certain component means that it may further include or be further provided with other components, and does not exclude other components unless particularly stated on the contrary.

Throughout the present specification, a description of "A and/or B" means "A or B, or both".

In addition, the term "about" or "substantially" used throughout the present specification is used to indicate, when manufacturing and material tolerances inherent to the mentioned meaning are presented, the number or a meaning close to the number, and is used to prevent unscrupulous infringers from unfairly using the disclosure stating precise or absolute numbers to help understand the present application.

Throughout the present specification, a temperature means a Celsius temperature unless particularly stated otherwise, and the unit is °C.

In an electrochemical device such as a lithium secondary battery, an olefin polymer porous support is typically used as a separator. In order to improve thermal shrinkage rate of the separator and adhesion to an electrode, an inorganic hybrid porous layer and/or an adhesive layer are introduced onto at least one surface of the olefin polymer porous support.

However, when only an inorganic hybrid porous layer is introduced without introducing an adhesive layer, the content of a binder polymer needs to be high in the inorganic hybrid porous layer to secure a desired level of electrode adhesion, which causes a problem of cell performance degradation caused by an increase in resistance. In addition, when an adhesive layer is introduced onto at least one surface of the inorganic hybrid porous layer, there are still problems in that peel strength between the olefin polymer porous support and the inorganic hybrid porous layer is not sufficient, or additional formation of the adhesive layer makes it difficult for an electrolyte liquid to pass through, and cell performance is degraded since the adhesive layer itself acts as resistance.

In view of the above, the inventors of the present disclosure intend to provide a separator that improves electrode adhesion and close adhesion to a substrate while minimizing the content of a binder polymer as a prescribed binder composition that may be introduced to an inorganic hybrid porous layer and/or an adhesive layer, and has low resistance, and an electrochemical device including the same.

The binder composition for a separator of an electrochemical device according to one embodiment of the present disclosure includes:
a polyvinyl alcohol-based compound; a binder resin; and an aqueous dispersant,
wherein the polyvinyl alcohol-based compound is included in an amount ranging from 0.01 wt% to 1.5 wt% based on 100 wt% of the total solid content in the binder composition,
and the binder resin includes at least one particle-type acrylic polymer resin.

Next, the binder composition will be described in more detail.

### Polyvinyl Alcohol-Based Compound

In one embodiment of the present disclosure, the polyvinyl alcohol-based compound is included in an amount ranging from 0.01 wt% to 1.5 wt% based on 100 wt% of the total solid content in the binder composition. By including the polyvinyl alcohol-based compound in the above-mentioned content range, close adhesion to the olefin polymer porous support and electrode adhesion of a separator may be improved. In addition, according to the present disclosure, wetting properties of the olefin polymer porous support are improved, and a wetting agent may not be used. When using a wetting agent, foam is generated, causing tank overflow during a coating process, and bubbles are generated, causing a problem of poor appearance of a separator, however, in the present disclosure, problems caused by using a wetting agent may be prevented. Meanwhile, when the content is outside the above-mentioned content range, the polyvinyl alcohol-based compound may interfere with adhesive properties, reducing electrode adhesion, and resistance and air permeability increase, causing a problem of battery performance degradation.

The polyvinyl alcohol-based compound may include polyvinyl alcohol, modified polyvinyl alcohol or a combination thereof. The modified polyvinyl alcohol may be polyvinyl alcohol modified with a functional group such as a carboxyl group, a sulfonic acid group, an amino group, a silanol group or a thiol group.

The polyvinyl alcohol-based compound may exhibit viscosity of 100 cps to 5,000 cps in a 4% aqueous solution at 25°C.

In one embodiment of the present disclosure, by the binder composition including the polyvinyl alcohol-based compound, a hydrophilic portion of the polyvinyl alcohol-based compound may strengthen binding with the binder resin and/or the inorganic filler, and a lipophilic portion thereof may strengthen close adhesion to the olefin polymer porous support.

In addition, the polyvinyl alcohol-based compound may form a network structure when drying the binder composition, and adhesion to an electrode may be improved since more binder resin is present in an upper layer portion of a separator.

### Binder Resin

In one embodiment of the present disclosure, the binder resin includes at least one particle-type acrylic polymer resin.

The particle-type acrylic polymer resin may be used without limit as long as it includes at least one repeating unit derived from an acrylic monomer. For example, as the acrylic monomer, an alkyl acrylate, an alkyl methacrylate, an isoalkyl (meth)acrylate and the like may be used, and herein, the "alkyl" may be an alkyl group having 1 to 10 carbon atoms, and more specifically, an alkyl group having 1 to 5 carbon atoms.

Specific examples of the acrylic monomer may include methyl (meth)acrylate, ethyl (meth)acrylate, propyl (meth)acrylate, butyl (meth)acrylate, pentyl (meth)acrylate, 2-ethylhexyl acrylate, acrylamide, methacrylamide and the like. The acrylic polymer may be a homopolymer formed with one type of repeating unit derived from the acrylic monomer, a copolymer including a repeating unit derived from two or more types of the acrylic monomers, or a mixture of two or more thereof.

In addition, the particle-type acrylic polymer resin may be at least one copolymer of non-acrylic monomer and acrylate monomer, such as at least one selected from the group consisting of acrylate-styrene-butadiene rubber, acrylate-acrylonitrile-styrene-butadiene rubber, methyl acrylate-styrene-butadiene rubber, methyl acrylate-acrylonitrile-styrene-butadiene rubber, ethyl acrylate-styrene-butadiene rubber, ethyl acrylate-acrylonitrile-styrene-butadiene rubber, propyl acrylate-styrene-butadiene rubber, propyl acrylate-acrylonitrile-styrene-butadiene rubber, butyl acrylate-styrene-butadiene rubber, butyl acrylate-acrylonitrile-styrene-butadiene rubber and the like. In the copolymer of non-acrylic monomer and acrylate monomer, % by weight of the repeating unit derived from the acrylate monomer may be 5% by weight to 45% by weight, and more specifically, 5% by weight to 35% by weight.

In addition, the particle-type acrylic polymer resin may be a mixture of two or more homo-acrylic polymers, a mixture of two or more acrylic copolymers, or a mixture of two or more copolymers of non-acrylic monomer and acrylate monomer, and in addition thereto, may be a mixture of two or more of the homo-acrylic polymer, the acrylic copolymer, and the copolymer of non-acrylic monomer and acrylate monomer.

The particle-type acrylic polymer resin is water-dispersible, and may maintain a particle form when dispersed in an aqueous solvent, having an emulsion form. The particle-type acrylic polymer resin has adhesive properties, providing peel strength between the olefin polymer porous support and the inorganic hybrid porous layer or peel strength between the inorganic hybrid porous layer and the adhesive layer, and may serve to fix the inorganic filler and/or the binder resin in the inorganic hybrid porous layer so that they are not detached. Furthermore, maintaining a particle form in a separator is advantageous for securing pores, facilitating Li ion migration, thereby achieving effects of low increase rate in resistance and excellent lifetime properties.

The particle-type acrylic polymer resin may have an average particle diameter of 100 nm to 1,500 nm. By having a particle diameter in the above-mentioned range, the area adhering to an electrode increases, resulting in excellent electrode adhesion, and a high yield may be secured in a secondary battery cell manufacturing process.

In the present disclosure, the average particle diameter refers to a "D50 particle diameter", and the "D50 particle diameter" refers to a particle diameter at a 50% point in the cumulative particle count distribution depending on the particle diameter. The particle diameter may be measured using a laser diffraction method. Specifically, powder to be measured is dispersed in a dispersion medium, then the result is introduced to a commercially available laser diffraction particle size measuring device (for example, Microtrac S3500), and a difference in the diffraction pattern depending on the particle size is measured when the particles pass through the laser beam to calculate particle size distribution. The D50 particle diameter may be measured by calculating the particle diameter at a point of 50% in the cumulative particle count distribution depending on the particle diameter in the measuring device.

The binder resin may further include a polyvinylidene fluoride-based polymer resin in addition to the particle-type acrylic polymer resin. In this case, the polyvinylidene fluoride-based polymer resin may improve adhesion to an electrode even when an electrolyte liquid is injected into a secondary battery cell, and an effect of lowering a failure rate may be achieved.

Examples of the polyvinylidene fluoride-based polymer resin may include polyvinylidene fluoride-co-hexafluoropropylene, polyvinylidene fluoride-co-trichloroethylene, polyvinylidene fluoride-co-tetrafluoroethylene, polyvinylidene fluoride-co-trifluoroethylene, polyvinylidene fluoride-co-trifluorochloroethylene, polyvinylidene fluoride-co-ethylene or a mixture of two or more thereof.

The binder resin may be included in an amount ranging from 1 wt% to 30 wt % or 1 wt% to 10 wt% based on 100 wt% of the total solid content in the binder composition. Particularly, the present disclosure is capable of exhibiting the same peel strength with the substrate and electrode adhesion as an existing separator including a binder resin in an amount of about 20 wt%, while reducing the binder resin content to about 10 wt%, and therefore, there is an advantage of improving peel strength and adhesion while including a smaller amount of binder resin.

Meanwhile, in one embodiment of the present disclosure, the content of the inorganic filler in the inorganic hybrid porous layer may be 80 wt% or greater in 100 wt% of the inorganic hybrid porous layer.

### Aqueous Dispersant

In one embodiment of the present disclosure, the binder composition includes an aqueous dispersant.

The aqueous dispersant is a solution-type, and may be dissolved in a solvent.

The aqueous dispersant may be an acrylic copolymerized polymer. The acrylic copolymerized polymer refers to a polymer including at least two different repeating units derived from an acrylic monomer. For example, the acrylic monomer may be an alkyl acrylate, an alkyl methacrylate, an isoalkyl (meth)acrylate and the like, and herein, the "alkyl" may be an alkyl group having 1 to 10 carbon atoms, and more specifically, an alkyl group having 1 to 5 carbon atoms.

The acrylic copolymerized polymer may have the form of a random copolymer, a block copolymer, a graft copolymer or the like, however, it is advantageous to have the form of a random copolymer in terms of improving adhesion to an electrode. Particularly, there is electrostatic repulsion working between non-blocked repeating units, having an advantageous effect in pulverization between inorganic materials. Using some of dispersants utilizing steric hindrance may cause a problem in workability due to an increase in viscosity, however, when using a dispersant utilizing electrostatic repulsion, low viscosity may be maintained.

The aqueous dispersant may be included in an amount ranging from 0.5 wt% to 5.0 wt% based on 100 wt% of the total solid content in the binder composition. When the aqueous dispersant is included in the above-mentioned range, an excellent effect may be obtained in dispersion between inorganic materials with a small amount, and an advantageous effect in battery lifetime may also be obtained through content optimization.

### <Separator>

In one embodiment of the present disclosure, a separator for an electrochemical device includes:
an olefin polymer porous support; and an inorganic hybrid porous layer formed on at least one side surface of the olefin polymer porous support,
wherein the inorganic hybrid porous layer may include an inorganic filler and the binder composition described above.

Next, the separator for an electrochemical device will be described in more detail.

### Olefin Polymer Porous Support

The olefin polymer porous support is a porous ion-conducting barrier allowing ions to pass through while blocking electrical contact between a negative electrode and a positive electrode, and refers to a substrate having a plurality of pores formed therein. The pores are interconnected to each other, allowing gas or liquid to pass from one side surface to the other side surface of the substrate. As such a substrate, planar olefin polymer porous supports commonly used in secondary batteries such as porous membranes or nonwoven fabrics formed with various polymers may all be used in terms of providing a shut-down function.

For example, polyolefin-based porous membranes or nonwoven fabrics made of polyethylene terephthalate fiber, or the like, used as a separator of a secondary battery, particularly a lithium secondary battery, may be used, and materials and forms thereof may be selected diversely depending on the intended purpose. For example, the polyolefin-based porous membrane may be formed from polymers in which one, or two or more polyolefin-based polymers selected from the group consisting of polyethylene such as high-density polyethylene, linear low-density polyethylene, low-density polyethylene or ultra-high molecular weight polyethylene; polypropylene; polybutylene; and polypentene, and the nonwoven fabric may also be prepared from fibers using polyolefin-based polymers or polymers with higher heat resistance.

The olefin polymer porous support may have a thickness ranging from 1 µm to 30 µm. For example, the olefin polymer porous support may have a thickness ranging from 1 µm to 20 µm or 5 µm to 20 µm. When the thickness of the olefin polymer porous support satisfies such a range, mechanical properties may be readily maintained, and an increase in battery resistance may be prevented.

The olefin polymer porous support may have porosity ranging from 30% to 75%. For example, the olefin polymer porous support may have porosity ranging from 35% to 65%. When the porosity satisfies such a range, an increase in battery resistance may be prevented, and mechanical properties of the olefin polymer porous support may be maintained.

The olefin polymer porous support may have a pore size ranging from 0.01 µm to 5.0 µm. For example, the olefin polymer porous support may have a pore size ranging from 0.1 µm to 1.0 µm. When the pore size satisfies such a range, an increase in battery resistance caused by the blocked pore structure may be prevented, and self-discharge properties may be maintained in a general secondary battery.

### Inorganic Hybrid Porous Layer

The inorganic hybrid porous layer is formed on at least one side surface of the olefin polymer porous support, and may include an inorganic filler and the binder composition described above.

In the inorganic hybrid porous layer, the inorganic fillers are bound to each other by the binder resin while being in contact with each other after filling the layer. This creates an interstitial volume between the inorganic fillers, and the interstitial volume between the inorganic fillers becomes an empty space and forms pores. In other words, the binder resin attaches the inorganic fillers to each other so that these remain bound to each other, and for example, the binder resin connects and fixes between the inorganic fillers. In addition, the pores of the inorganic hybrid porous layer are pores formed as the interstitial volume between the inorganic fillers becomes an empty space, and this is a space limited by the inorganic fillers that are substantially in contact with each other in a closed packed or densely packed structure by the inorganic fillers.

The content of the inorganic filler may be 80 wt% to 99 wt% based on 100 wt% of the total sum of solid content of the inorganic filler and the binder composition. When the inorganic filler is included in the above-content range, heat resistance properties may be improved, and in addition thereto, resistance of the separator may be reduced, and energy density of a battery may increase.

The inorganic filler is not particularly limited as long as it is electrochemically stable. In other words, the inorganic filler that may be used in the present disclosure is not particularly limited as long as it does not undergo oxidation and/or reduction reaction in an operating voltage range (for example, 0 V to 5 V based on Li/Li+) of a battery in which it is used. Examples of such an inorganic filler may include ZrO₂, BaTiO₃, Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT), hafnia (HfO₂), SrTiO₃, SnO₂, CeO₂, MgO, NiO, CaO, ZnO, ZrO₂, Y₂O₃, Al₂O₃, TiO₂, AlOOH, Al(OH)₃, SiC, a mixture thereof, or the like.

In addition thereto, lithium phosphate (Li₃PO₄), lithium titanium phosphate (LiₓTi_{y}(PO₄)₃, 0<x<2, 0<y<3), lithium aluminum titanium phosphate (LiₓAl_{y}Tiz(PO₄)₃, 0 <x<2, 0<y<1, 0<z<3), (LiAlTiP)ₓO_{y} series glass (0<x<4, 0<y<13), lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), lithium nitride (LiₓN_{y}, 0<x<4, 0<y<2), SiS₂ series glass (LiₓSi_{y}S_{z}, 0<x<3, 0<y<2, 0<z<4), P₂S₅ series glass (LiₓP_{y}S_{z}, 0<x<3, 0<y<3, 0<z<7), or two or more inorganic fillers thereof may be further included.

The inorganic filler may preferably have an average particle diameter (D50) ranging from 20 nm to 700 nm to form an inorganic hybrid porous layer having a uniform thickness and to have proper porosity thereof. Specifically, the average particle diameter (D50) may be in a range of 100 nm to 500 nm. When the average particle diameter (D50) of the inorganic filler satisfies such a range, dispersibility of a slurry for the inorganic hybrid porous layer is maintained, making it easy to control properties of the separator, and problems of reducing mechanical properties caused by an excessive increase in the separator thickness or an occurrence of internal short-circuit during charge and discharge of a battery caused by an excessively large pore size may be prevented. In addition, packing density increases, contributing to a thermal shrinkage rate, and excellent high heat resistance may be obtained in the above-mentioned particle size range.

In addition, in another embodiment of the present disclosure, the separator for an electrochemical device includes: an olefin polymer porous support; an inorganic hybrid porous layer formed on at least one side surface of the olefin polymer porous support; and an adhesive layer formed on a surface of the inorganic hybrid porous layer,

wherein the adhesive layer may include the binder composition of claim 1.

Herein, the inorganic hybrid porous layer may include an inorganic filler and a binder resin for an inorganic hybrid porous layer, and the binder resin for an inorganic hybrid porous layer may include at least one selected from among a particle-type acrylic polymer resin and a polyvinylidene fluoride-based polymer resin. The particle-type acrylic polymer resin and the polyvinylidene fluoride-based polymer resin are the same as described above.

The separator for an electrochemical device according to one embodiment of the present disclosure may exhibit electrode adhesion of 5 gf/25 mm or greater, 15 gf/25 mm or greater, or 25 gf/25 mm or greater. Specifically, in the present disclosure, both peel strength between the olefin polymer porous support and the inorganic hybrid porous layer of the separator, and adhesion between the separator and an electrode may be sufficiently developed.

In one embodiment of the present disclosure, the electrode adhesion may be measured from force required to separate the separator when sandwiching the coated separator and an electrode between sheets of A4 paper, adhering them by pressing them together for 10 seconds at a temperature of 60°C and a pressure of 1000 kgf using a horizontal laminator, and applying force to the adhered separator at a measurement rate of 300 mm/min in a 180° direction.

For example, the coated separator (25 mm widthx13 cm length) and an electrode are placed between sheets of A4 paper, and adhered to each other by being pressed for 10 seconds at a temperature of 60°C and a pressure of 1000 kg using a heat press device. The adhered electrode and separator are peeled off by applying force in a 180° direction using a UTM device to measure electrode adhesion of the separator.

An electrochemical device according to the present disclosure includes: a positive electrode; a negative electrode; and a separator interposed between the positive electrode and the negative electrode, wherein the separator is the separator according to one embodiment of the present disclosure described above.

Such an electrochemical device includes all devices that undergo electrochemical reactions, and specific examples thereof may include all types of primary and secondary batteries, fuel cells, solar cells, capacitors such as super capacitor devices, and the like. Particularly, among the secondary batteries, lithium secondary batteries including a lithium metal secondary battery, a lithium ion secondary battery, a lithium polymer secondary battery, a lithium ion polymer secondary battery, or the like are preferred.

Both electrodes of the positive electrode and the negative electrode to be used in the present disclosure are not particularly limited, and may be prepared in a form in which an electrode active material is bound to an electrode current collector according to a common method known in the art.

Among the electrode active materials, nonlimiting examples of the positive electrode active material may include common positive electrode active materials that may be used in a positive electrode of a lithium secondary battery. Particularly, lithium manganese oxide, lithium cobalt oxide, lithium nickel oxide, lithium iron oxide, lithium composite oxide that is a combined form thereof, or the like may be used.

Nonlimiting examples of the negative electrode active material may include common negative electrode active materials that may be used in a negative electrode of a lithium secondary battery. Particularly, lithium metal or lithium alloy, or lithium adsorbing materials such as carbon, petroleum coke, activated carbon, graphite or other carbonaceous materials, or the like, may be used.

Nonlimiting examples of the positive electrode current collector may include foil made of aluminum, nickel, a combination thereof, or the like, and nonlimiting examples of the negative electrode current collector may include foil made of copper, gold, nickel, a copper alloy, a combination thereof, or the like.

An electrolyte liquid that may be used in the electrochemical device of the present disclosure includes an electrolyte liquid in which a salt having a structure such as A+B- in which A⁺ includes an alkali metal cation such as Li⁺, Na⁺ or K⁺, or an ion formed with a combination thereof and B⁻ includes an anion such as PF₆⁻, BF₄⁻, Cl⁻, Br⁻, I⁻, ClO₄⁻, AsF₆⁻, CH₃CO₂⁻, CF₃SO₃-, N(CF₃SO₂)₂⁻ or C(CF₂SO₂)₃⁻, or an ion formed with a combination thereof, is dissolved or dissociated in an organic solvent including propylene carbonate (PC), ethylene carbonate (EC), diethyl carbonate(DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma butyrolactone (γ-butyrolactone) or a mixture of two or more thereof, however, the electrolyte liquid is not limited thereto.

Injection of the electrolyte liquid may be performed at a proper stage during the battery manufacturing process depending on the manufacturing process and required properties of a final product. In other words, the injection may be performed before battery assembly or in a final stage of battery assembly.

A method for manufacturing the separator for an electrochemical device according to the present disclosure is not particularly limited, however, the separator may be manufactured using a method presented below or a method common in the art.

For example, the method for manufacturing the separator for an electrochemical device according to one embodiment of the present disclosure may include: introducing an inorganic filler and an aqueous solvent to a binder composition including a polyvinyl alcohol-based compound, a binder resin and an aqueous dispersant to form a slurry for forming an inorganic hybrid porous layer; and then applying the slurry on at least one side surface of an olefin polymer porous support, and drying the result to form an inorganic hybrid porous layer.

Herein, nonlimiting examples of the aqueous solvent may include at least one selected from among water, methanol, ethanol, propyl alcohol, butyl alcohol, butanediol, ethylene glycol, propylene glycol, and tripropylene glycol.

In the present disclosure, after applying the slurry for forming an inorganic hybrid porous layer on the olefin polymer porous support, phase separation may occur during the process of drying the solvent. Particularly, phase separation occurs during the process of drying the solvent by a density difference in the single inorganic hybrid porous layer, and as a result, a separator in which the portion of the inorganic hybrid porous layer close to the olefin polymer porous support includes more inorganic filler and the outermost portion of the inorganic hybrid porous layer has more binder polymer may be provided.

In addition, the method for manufacturing the separator for an electrochemical device according to another embodiment of the present disclosure may include: forming an inorganic hybrid porous layer on at least one side surface of an olefin polymer porous support; and applying a slurry for forming an adhesive layer on a surface of the inorganic hybrid porous layer and drying the result to form an adhesive layer. The slurry for forming an adhesive layer may be a mixture of the binder composition according to one embodiment of the present disclosure and an aqueous solvent.

Hereinafter, the present disclosure will be described in detail with reference to examples in order to specifically describe the present disclosure. However, examples according to the present disclosure may be modified to various different forms, and the scope of the present disclosure should not be construed as being limited to the examples described below. The examples of the present disclosure are provided in order to more fully describe the present disclosure to those having average knowledge in the art.

### Example

### Manufacture of Separator According to First Embodiment

1) A polyethylene substrate film (B09PJ1 of Toray Industries Inc., thickness: 9 µm) was prepared.
2) On one surface of the polyethylene substrate, a slurry in which a polyvinyl alcohol compound, a binder resin, an aqueous dispersant and an inorganic filler are mixed into water, a solvent, was applied to a thickness of 2.5 µm, and then the result was dried to form an inorganic hybrid porous layer. Herein, the following A is particle-type acrylic binder 1 (manufactured by LG Chem., ADS-11) having an average particle diameter of 450 nm, B is particle-type acrylic binder 2 (manufactured by Hansol Chemical, HES-2019) having an average particle diameter of 400 nm, and C is a PVDF-based resin (manufactured by Arkema, LBG4430), and A and B, and A and C each had a mixing ratio of 5:5 (weight ratio). The following D is an acrylic random acrylic copolymer (BYK, BYK-154), and E is a block acrylic copolymer (BYK).

As for the composition of the separator composition prepared in each of Examples 1 to 6 and Comparative Examples 1 to 5, types and contents of the polyvinyl alcohol compound, the binder resin, the aqueous dispersant and the inorganic filler (based on solid content, wt%) are shown in the following Table 1.

**[Table 1]**

| | | Example | | | | | | Comparative Example | | | | |
|---|---|---|---|---|---|---|---|---|---|---|---|---|
| | | 1 | 2 | 3 | 4 | 5 | 6 | 1 | 2 | 3 | 4 | 5 |
| PVA Content (wt%) | | 0.1 | 0.05 | 0.1 | 0.3 | 0.3 | 0.3 | - | - | - | - | 2.0 |
| Binder Resin | Type | A+B | A+B | A+B | A+B | A+B | A+B | A+B | A+C | A+B | A+B | A+B |
| | Content (wt%) | 10 | 10 | 10 | 10 | 10 | 10 | 19 | 10 | 17 | 10 | 10 |
| Aqueous Dispersant | Type | D | D | D | D | D | D | E | E | E | E | D |
| | Content (wt%) | 1 | 1 | 1 | 1 | 1 | 1 | 1 | 1 | 1 | 1 | 1 |
| Inorganic Filler | Type | Al₂O₃ | Al₂O₃ | Al₂O₃ | Al₂O₃ | Al₂O₃ | Al₂O₃ | Al₂O₃ | Al₂O₃ | Al₂O₃ | Al₂O₃ | Al₂O₃ |
| | Content (wt%) | 88.9 | 88.9 5 | 88.9 | 88.7 | 88.7 | 88.7 | 80 | 89 | 82 | 89 | 89 |

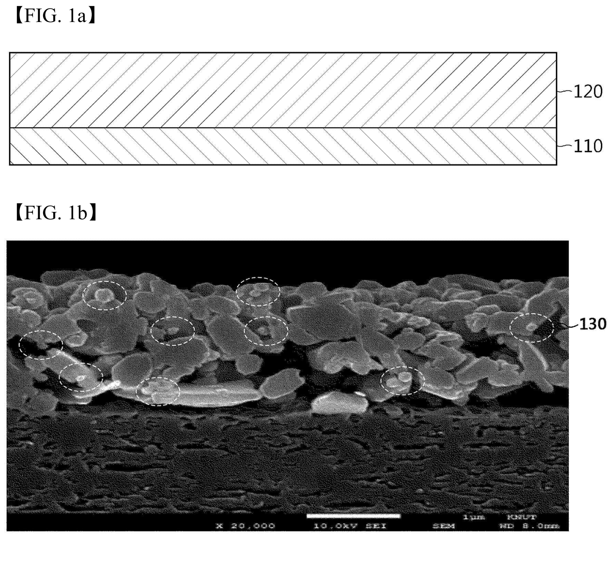

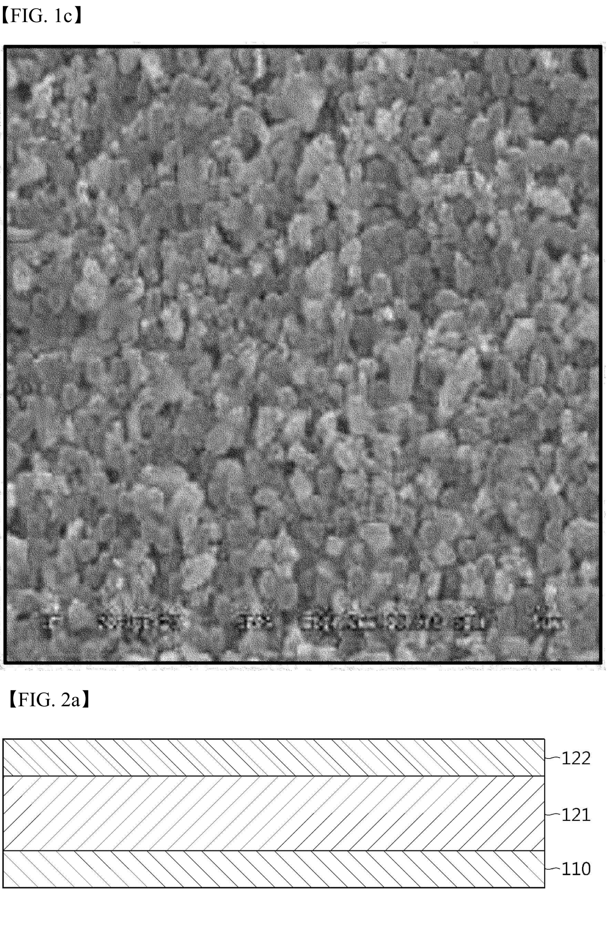

FIG. 1b is an SEM image showing the cross-section of the separator obtained in Example 4, and porous support and inorganic hybrid porous layer are identified. In addition, FIG. 1c shows an SEM image of the cross-section and surface of the separator obtained in Example 4. Referring to these images, it may be identified that the inorganic hybrid porous layer is formed on the surface of the porous support, and inorganic particles and particle-type binder resin are mixed therein. In FIG. 1b, the particle-type binder resin is indicated by a dotted line, and designated as reference numeral 130.

Results of evaluating properties of the separator manufactured in each of Examples 1 to 6 and Comparative Examples 1 to 5 according to Table 1 are shown in the following Table 2.

**[Table 2]**

| | Example | | | | | | Comparative Example | | | | |
|---|---|---|---|---|---|---|---|---|---|---|---|
| | 1 | 2 | 3 | 4 | 5 | 6 | 1 | 2 | 3 | 4 | 5 |
| Thickness (µm) | 2.5 | 2.4 | 2.5 | 2.6 | 2.5 | 2.5 | 2.5 | 2.5 | 2.4 | 2.6 | 2.5 |
| Peel Strength (gf/15 mm) | 40 | 30 | 40 | 60 | 40 | 50 | 40 | 22 | 50 | 20 | 55 |
| Dry Adhesion (gf / 25 mm) | 40 | 35 | 50 | 65 | 50 | 55 | 40 | 20 | 45 | 15 | 2 |
| Air Permeability (100 ml/cc) | 90 | 85 | 95 | 95 | 90 | 90 | 89 | 94 | 93 | 95 | 130 |
| Resistance (Ω) | 0.62 | 0.61 | 0.63 | 0.65 | 0.69 | 0.65 | 0.69 | 0.65 | 0.68 | 0.65 | 0.77 |
| Heat Resistance Shrinkage Rate (%@150°C/30 minutes) MD/TD | 5/5 | 4/5 | 5/5 | 4/4 | 5/5 | 3/5 | 10/12 | 7/7 | 8/10 | 7/5 | 9/9 |
| Appearance (Visual Identification) | ⊚ | ⊚ | ⊚ | ⊚ | ⊚ | ⊚ | ○ | ○ | ○ | ○ | ○ |
| Extent of Foaming (Visual Identification) | ⊚ | ⊚ | ⊚ | ⊚ | ⊚ | ⊚ | ○ | ○ | ○ | ○ | ○ |

### Comparative Example 6

1) A polyethylene substrate film (B09PJ1 of Toray Industries Inc., thickness: 9 µm) was prepared.
2) On one surface of the polyethylene substrate, a slurry in which a polyvinyl alcohol compound, a binder resin, an aqueous dispersant and an inorganic filler are mixed into water, a solvent, was applied to a thickness of 2.5 µm, and then the result was dried to form an inorganic hybrid porous layer. Herein, the composition of the inorganic hybrid porous layer was the same as in Example 1 except for the type of the binder resin.

The binder resin used in Comparative Example 6 is a non-particle-type acrylic copolymer, and is an acrylic copolymer in which sodium acrylate and acrylonitrile are polymerized in a weight ratio of 50:50. The prepared acrylic copolymer had viscosity of 3,851 cps. Herein, the viscosity was measured at 5 rpm with a 62 spindle using a Brookfield viscometer. Herein, the reference solvent for measuring the viscosity is mineral oil (KS1000 & 5000) as a standard solution for viscometer calibration.

When evaluating dry adhesion of the separator manufactured in Comparative Example 6, the adhesion was 0, and adhesion was not developed between the electrode and the separator.

### Evaluation of Properties

### [Measurement of Thickness]

The coated separator was cut to a size of 50 mmx50 mm using a die-cutting machine, and then the thickness was measured using VL-50S-B of MITUTOYO Corporation. Five points were measured per sample, and an average value thereof was reported.

### [Measurement of Peel Strength]

The coated separator was cut to 13 cm lengthx 15 mmm width using a 15 mm wide steel ruler, and after attaching the coated surface to transparent glass using a double-side tape, 180 degree peel strength was measured using a UTM measuring device. Three points were measured per sample, and an average value thereof was reported.

### [Dry Adhesion]

The coated separator (25 mm widthx13 cm length) and the electrode were placed between sheets of A4 paper, and adhered to each other by being pressed for 10 seconds at a temperature of 60°C and a pressure of 1000 kg using a heat press device. The adhered electrode and separator were peeled off by applying force in a 180° direction using a UTM device to measure electrode adhesion of the separator.

### [Air Permeability]

The coated separator was placed in a Gurley air permeability measuring device, and the value displayed on the screen after 5 seconds was measured.

### [Measurement of Resistance]

The coated separator was cut using a die-cutting machine to fit the coin cell structure shown below, and then assembled to fit the structure shown below. Herein, the electrolyte liquid was prepared by adding 1 M of lithium salt LiPF₆ and 2% by weight of vinylene carbonate (VC) to a solvent in which ethylene carbonate (EC) and ethylmethyl carbonate (EMC) were mixed in a volume ratio of 30:70. Four to five drops of the electrolyte liquid were dropped, the result was introduced to a coin cell compressor, and the cap was completely sealed. After that, the coin cell was aged for 3 hours at room temperature, and then resistance was measured. For each of the coin cells, resistance was measured through electrochemical impedance spectroscopy analysis results under a condition of scan range of 100000 Hz to 10000 Hz at 25°C using 1470E cell test system and frequency response analyzer 1255B of Solaton.

### [Heat Resistance Shrinkage Rate]

The coated separator was cut to a size of 50 mmx50 mm using a die-cutting machine. Then, the cut coated separator was placed between 20 sheets of A4 paper, and then introduced to an oven maintained at 150°C. After 30 minutes, lengths shrunken in the MD/TD directions were measured, and then the shrunken lengths compared to the initial lengths were evaluated.

### [Properties of Electrolyte Liquid Impregnation]

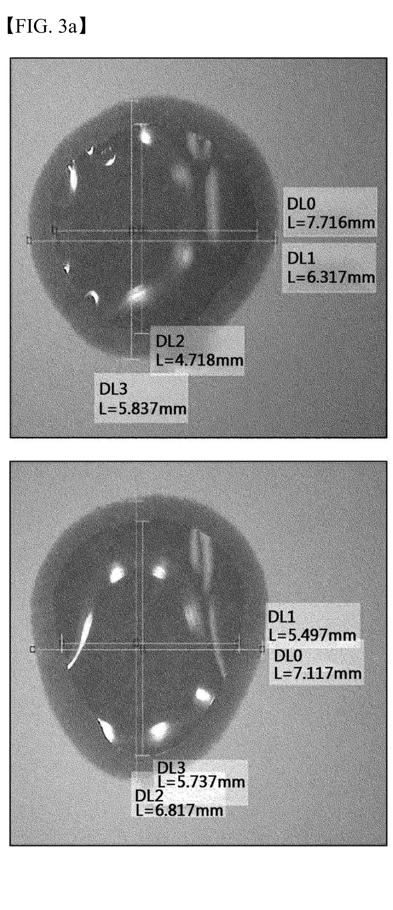

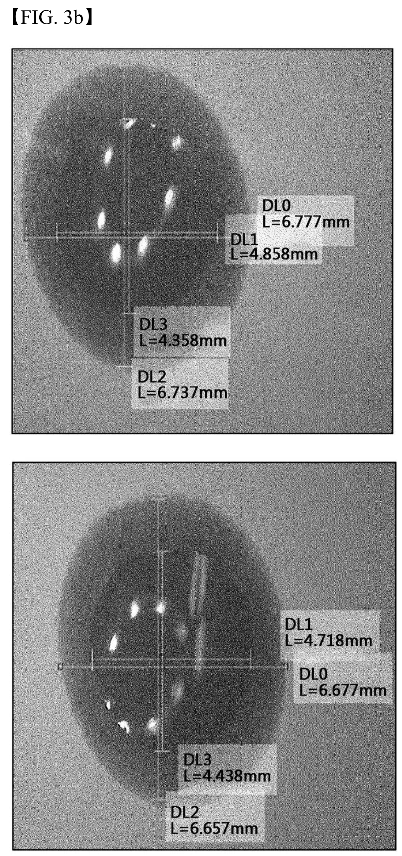

The coated separator was cut to a size of 50 mmx50 mm, and after marking the coating direction (MD), Dino-Lite measurement program and optical microscope were adjusted. Then, 2 µl of a polycarbonate solvent was introduced to a syringe, and a single drop thereof was dropped on the fixed separator. After leaving the result unattended for 5 minutes, the extent of spreading of the polycarbonate solvent, an electrolyte liquid, was photographed, and then the size (DL0 to DL3) was displayed using the program. Images from the evaluation results of Example 4 and Comparative Example 4 are shown in FIGS. 3a and 3b, respectively. It could be identified that the measured DL0 to DL3 values were larger in Example 4 compared to in Comparative Example 4 since the polycarbonate solvent spread better. In other words, it could be identified that Example 4 had superior electrolyte liquid impregnation properties compared to Comparative Example 4.

### [Evaluation of Electrolyte Liquid Detachment]

An oil-based separator was manufactured in the same manner as in Example 4, except that a PVDF-based resin as a binder resin and an acetone solvent were used. The oil-based separator and the separator manufactured in Example 4 were each impregnated with and stored in an electrolyte liquid for 24 hours under a temperature condition of 65°C, and then hand-shaken to identify the level of inorganic material detachment from the separator. Herein, the electrolyte liquid consisted of EC and EMC in a ratio of 30:70, and 2% VC. In the separator according to Example 4, the coating layer was not detached after impregnated with the electrolyte liquid, however, in the oil-based separator, the coating layer formed on the separator was detached, and the electrolyte turned cloudy.

### [Appearance and Extent of Foam Generation]

The coated separator was checked with the naked eye to visually identify the appearance and the extent of foam generation. The appearance was evaluated as ⊚ (very good) or ∘ (good to average) depending on the presence of uncoated area and surface smoothness, and specifically, it was evaluated as ⊚ when no uncoated area was present and the surface was smooth.

The extent of foam generation was evaluated as ⊚ (very good) or o (good to average) depending on the generation of foam on the surface of the coated separator, and specifically, it was evaluated as ⊚ when there was no foam generation.

### Manufacture of Separator According to Second Embodiment

1) A polyethylene substrate film (B09PJ1 of Toray Industries Inc., thickness: 9 µm) was prepared.
2) On the polyethylene substrate, a slurry (solid content 5%) prepared by adding inorganic particles Al₂O₃ and a binder polymer (mixture of product name TRD 202A of JSR Corporation and product name AP-0821 of APEC Corporation) to a solvent in a weight ratio of 96:4 was applied to a thickness of 1.5 µm, and the result was dried to form an inorganic hybrid porous layer.
3) On the surface of the inorganic hybrid porous layer, a slurry in which a polyvinyl alcohol compound, a binder resin and an aqueous dispersant were mixed into water, a solvent, was applied to a thickness of 1.5 µm, and the result was dried to form an adhesive layer.

Herein, types and contents of the polyvinyl alcohol compound, the binder resin and the aqueous dispersant are shown in the following Table 3 (based on solid content, wt%).

**[Table 3]**

| | | Example | | | Comparative Example | |
|---|---|---|---|---|---|---|
| | | 7 | 8 | 9 | 7 | 8 |
| PVA Content (wt%) | | 1.5 | 1.5 | 1.0 | - | - |
| Binder Resin | Type | C | A | A | C | C |
| | Content (wt%) | 97 | 97 | 97 | 97 | 97 |
| Aqueous Dispersant | Type | D | D | D | E | E |
| | Content (wt%) | 1.5 | 1.5 | 2.0 | 3 | 3 |

Results of evaluating properties of the separator manufactured in each of Examples 7 to 9 and Comparative Example 7 and 8 according to Table 3 are shown in the following Table 4.

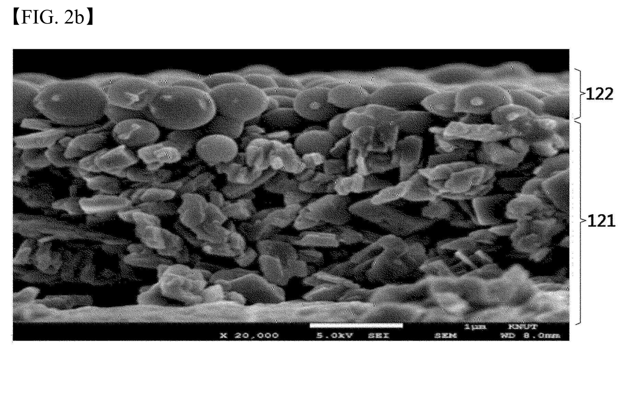

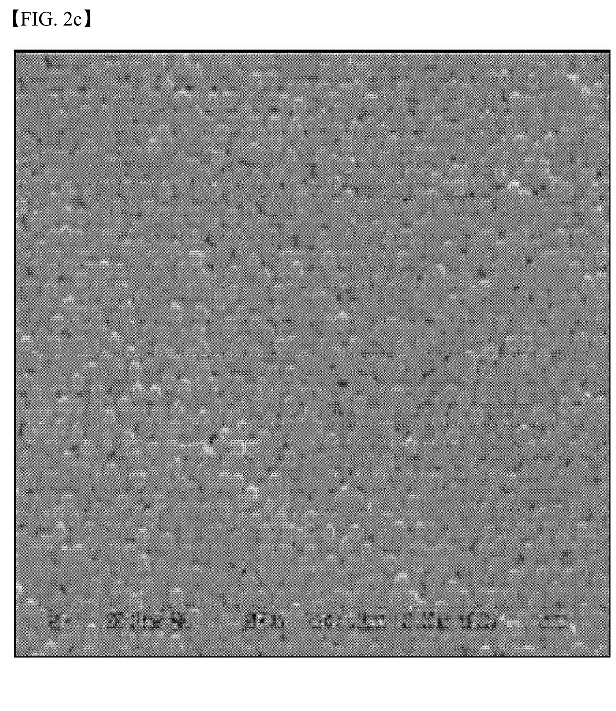

Meanwhile, FIGS. 2b and 2c show the cross-section and the surface of the inorganic hybrid porous layer and the adhesive layer in the separator obtained in Example 7. Referring to these images, it is identified that the adhesive layer including the particle-type binder resin is disposed on the surface of the inorganic hybrid porous layer.

**[Table 4]**

| | Example | | | Comparative Example | |
|---|---|---|---|---|---|
| | 7 | 8 | 9 | 7 | 8 |
| Thickness (µm) | 0.5 | 0.5 | 0.5 | 0.5 | 0.5 |
| Peel Strength (gf/15 mm) | 40 | 40 | 45 | 20 | 25 |
| Dry Adhesion (gf / 25 mm) | 25 | 30 | 35 | 12 | 15 |
| Air Permeability (100 ml/cc)) | 80 | 88 | 85 | 85 | 85 |
| Resistance (Ω) | 0.65 | 0.65 | 0.66 | 0.67 | 0.67 |
| Heat Resistance Shrinkage Rate (%@150°C/30 minutes) MD/TD | 12/15 | 10/8 | 8/8 | 15/10/ | 12/10 |
| Appearance (Visual Identification) | ⊚ | ⊚ | ⊚ | ○ | ○ |
| Extent of Foaming (Visual Identification) | ⊚ | ⊚ | ⊚ | ○ | ○ |

### [Reference Numeral]

110 Porous Support
120 Inorganic Hybrid Porous Layer
130 Particle-Type Binder Resin
122 Adhesive Layer
121 Inorganic Hybrid Coating Layer

## Claims

1. A binder composition for a separator of an electrochemical device, the binder composition comprising:
a polyvinyl alcohol-based compound;
a binder resin; and
an aqueous dispersant,
wherein the polyvinyl alcohol-based compound is included in an amount ranging from 0.01 wt% to 1.5 wt% based on 100 wt% of a total solid content in the binder composition, and
the binder resin includes at least one particle-type acrylic polymer resin.

2. The binder composition of claim 1, wherein the particle-type acrylic polymer resin has an average particle diameter of 100 nm to 1,500 nm.

3. The binder composition of claim 1, wherein the polyvinyl alcohol-based compound includes polyvinyl alcohol, modified polyvinyl alcohol or a combination thereof.

4. The binder composition of claim 1, wherein the polyvinyl alcohol-based compound exhibits viscosity of 100 cps to 5,000 cps in a 4% aqueous solution at 25°C.

5. The binder composition of claim 1, wherein the binder resin further includes a polyvinylidene fluoride-based polymer resin.

6. The binder composition of claim 1, wherein the aqueous dispersant is an acrylic copolymerized polymer.

7. The binder composition of claim 6, wherein the acrylic copolymerized polymer is a random copolymer.

8. The binder composition of claim 1, wherein the aqueous dispersant is included in an amount ranging from 0.5 wt% to 5.0 wt% based on 100 wt% of a total solid content in the binder composition.

9. A separator for an electrochemical device, the separator comprising:
an olefin polymer porous support; and
an inorganic hybrid porous layer formed on at least one side surface of the olefin polymer porous support,
wherein the inorganic hybrid porous layer includes an inorganic filler and the binder composition of claim 1.

10. The separator of claim 9, wherein a content of the inorganic filler is 80 wt% to 99 wt% based on 100 wt% of a total sum of solid content of the inorganic filler and the binder composition.

11. A separator for an electrochemical device, the separator comprising:
an olefin polymer porous support;
an inorganic hybrid porous layer formed on at least one side surface of the olefin polymer porous support; and
an adhesive layer formed on a surface of the inorganic hybrid porous layer,
wherein the adhesive layer includes the binder composition of claim 1.

12. The separator of claim 11, wherein the inorganic hybrid porous layer includes an inorganic filler and a binder resin for an inorganic hybrid porous layer.

13. The separator of claim 11, wherein the binder resin for an inorganic hybrid porous layer includes at least one selected from among a particle-type acrylic polymer resin and a polyvinylidene fluoride-based polymer resin.

14. The separator of any one of claims 9 to 13, which exhibits electrode adhesion of 5 gf/25 mm or greater.

15. An electrochemical device comprising:
a positive electrode;
a negative electrode; and
a separator interposed between the positive electrode and the negative electrode,
wherein the separator is the separator of any one of claims 9 to 13.

16. The electrochemical device of claim 15, which is a lithium secondary battery.
